# EUROPÄISCHE PATENTSCHRIFT

(11) **EP 0 888 654 B1**
(45) Veröffentlichungstag und Bekanntmachung des Hinweises auf die Patenterteilung: **28.07.1999**
(21) Anmeldenummer: 97920613.3
(22) Anmeldetag: 19.03.1997
(51) Int. Cl.: H01S 3/109, H01S 3/13, H01S 3/04

(54) **VERFAHREN ZUR MINDERUNG DES AMPLITUDENRAUSCHENS VON FESTKÖRPERLASERN MIT RESONATORINTERNER FREQUENZVERDOPPLUNG**
METHOD OF REDUCING AMPLITUDE NOISE OF SOLID LASERS WITH RESONATOR-INTERNAL FREQUENCY DOUBLING
PROCEDE PERMETTANT DE REDUIRE LE BRUIT D'AMPLITUDE DE LASERS A SOLIDE A DOUBLAGE DE FREQUENCE INTERNE AU RESONATEUR

(30) Priorität: 19.03.1996 DE 19610717
(43) Veröffentlichungstag der Anmeldung: 07.01.1999
(73) Patentinhaber: Schmitt, Nikolaus Peter, 80797 München (DE); Toesko, Günter, 96317 Kronach (DE); Schalk, Josef, 84051 Altheim (DE); Nikolov, Susanne, 85521 Ottobrun (DE)
(72) Erfinder: Schmitt, Nikolaus Peter, 80797 München (DE); Toesko, Günter, 96317 Kronach (DE); Schalk, Josef, 84051 Altheim (DE); Nikolov, Susanne, 85521 Ottobrun (DE)
(74) Vertreter: von Ahsen, Erwin-Detlef
(86) Internationale Anmeldenummer: EP9701364
(87) Internationale Veröffentlichungsnummer: WO9735369

(56) Entgegenhaltungen:
- US-A- 5 383 209
- US-A- 5 432 807
- PATENT ABSTRACTS OF JAPAN vol. 095, no. 009, 31.Oktober 1995 & JP 07 142804 A (ASAHI GLASS CO LTD), 2.Juni 1995,
- PATENT ABSTRACTS OF JAPAN vol. 018, no. 464 (E-1598), 29.August 1994 & JP 06 152040 A (NIPPON STEEL CORP), 31.Mai 1994,
- PATENT ABSTRACTS OF JAPAN vol. 095, no. 010, 30.November 1995 & JP 07 183605 A (HITACHI LTD), 21.Juli 1995,
- DATABASE WPI Section PQ, Week 9026 Derwent Publications Ltd., London, GB; Class P81, AN 90-199253 XP002037349 & SU 1 018 515 A ((AUTE-R) AS UKR TECH THERMOP) , 30.November 1989 & SU 1 018 515 A

## Beschreibung

Die Erfindung betrifft ein Verfahren gemäß dem Oberbegriff von Anspruch 1.

Festkörperlaser (meist unter Verwendung von Seltenerd-dotierten Kristallen oder Gläser, beispielsweise Nd:YAG, Nd:YVO₄, Nd:YAlO, Nd:YLF, Nd:Glas oder andere, ähnliche Festkörpermaterialien) mit resonatorinterner Frequenzverdopplung sind seit langem bekannt und werden in vielen Anwendungen der Lasertechnik eingesetzt. Man bedient sich hierbei der Erzeugung der zweiten oder höherer harmonischer Schwingungen in Materialien (vorwiegend Kristallen, welche kein Inversionszentrum besitzen, beispielsweise KTP, LBO, BBO, KNbO₃, LiNbO₃ oder andere) mit einem hohen nichtlinearen Koeffizienten, welcher durch anharmonische Schwingungen der Gitteratome, angeregt durch eine einfallende Lichtwelle, Licht der doppelten (oder vielfachen) Frequenz der eingestrahlten Lichtwelle erzeugt. Der Prozeß der Erzeugung höherer Harmonischer ist stark leistungsdichteabhängig (vergl. z. B. Köchner, Solid-State Laser Engineering), so daß zur Erzeugung frequenzverdoppelter Laserstrahlung hoher Effizienz der nichtlineare Kristall oftmals (zumindest bei kontinuierlich arbeitenden (cw) Lasern) entweder in den Resonator des Lasers selbst oder aber in einen eigenen Resonator eingebracht wird (s.o. oder auch z.B. Yariv, Quantum Electronics, 3. Aufl. S. 402). Während letzter Fall eines eigenen Resonators für den Frequenzverdoppler zwar den grundsätzlichen Vorteil geringer Amplitudenschwankungen aufweist, ist diese Anordnung durch einen erheblichen Aufwand dadurch gekennzeichnet, als der dem Frequenzverdopplerkristall zugehörige Resonator genau auf die Frequenz des Laserresonators aktiv stabilisiert werden muß und die Laserstrahlung zur Erzielung einer hohen Effizienz möglichst einfrequent sein sollte. Der erstere Fall der Einbringung des Frequenzverdopplerkristalles in den Laserresonator ist demgegenüber wesentlich unaufwendiger, es kann hier mit Lasern gearbeitet werden, welche auf mehreren bis vielen longitudinalen Moden emittieren; die Resonatorspiegel werden meist hochreflektierend für die Laserwellenlänge gewählt, um eine maximale Leistungsüberhöhung im Resonator und damit eine möglichst hohe Verdopplungseffizienz zu erreichen, der Auskoppelspiegel ist gleichzeitig hochtransmittant für die frequenzverdoppelte Strahlung, um diese gut aus dem Resonator auskoppeln zu können..

Allerdings weist diese Anordnung ein systembedingtes starkes Amplitudenrauschen auf, welches nach unserer Kenntnis zuerst von T. Baer in J. Opt. Soc. Am. B, Vol. 3 No 9, Sept. 1986, S. 1175 beschrieben wurde. Zur Erklärung dieses Rauschens gibt es mehrere unterschiedliche Ansätze. Baer erklärt dies durch eine Konkurrenz unterschiedlicher Moden (da die jeweils stärkste Mode am besten verdoppelt wird, wird sie durch Auskopplung aus dem Laserresonator am stärksten gedämpft und eine andere longitudinale Mode wird nun zur stärksten usf.). Andere Erklärung beruhen auf der Summenfrequenzerzeugung oder auf der Modenkonkurrenz zwischen Moden unterschiedlicher Polarisation (s. z.B. EP 0457 590 A2). Wahrscheinlich jedoch sind alle diese Mechanismen gleichzeitig am Rauschprozess beteiligt.

Besonders störend für viele Anwendungen ist hierbei die Tatsache, daß der Laser sehr niederfrequent rauschen kann, was sich in einem "Flackern" des Laserstrahles bemerkbar macht, dessen Modulationsgrad bis zu 100% betragen kann. Dieses Rauschen ist aufgrund des nichtlinearen Zusammenhanges der Verdopplungseffizienz (s. Koechner, vergl. oben) streng chaotisch, es können sich zeitweise stabile Zustände einstellen, die schlagartig von starkem Rauschen gefolgt werden können. Dieses Phänomen ist in der Literatur ausführlich untersucht worden (s. z.B. Phys. Rev. A. Vol. 41 No. 5, March 1990, S. 2778 oder Opt. Comm. 118 (1995) S. 289). Es wurden auch erste Regelungsmodelle entworfen, die dieses chaotische Rauschen ausregeln sollen, allerdings ist die Regelbandbreite dieser nichtlinearen Regler derzeit um mehrerer Größenordnung zu gering (erforderlich wären Bandbreiten von deutlich größer als 1 MHz für die nichtlineare Regelschleife), um das Rauschen praktisch unterdrücken zu können (s. z. B. Phys. Rev. A, Vol. 47, No. 4, April 1993, S. 3276).

Andere Ansätze der Rauschminimierung beruhen nach dem Stande der Technik im Einbringen eines Viertelwellenplättchens (s. US-Patent 4,618,957) oder Brewsterplättchens (s. DE 3917 902 A1) in den Resonator oder in der Temperaturstabilisierung des Verdopplerkristalles (s. EP 0 329 442 A2 ). Allerdings weisen alle diese Lösungswege nach dem Stande der Technik wesentliche Nachteile auf:

Das Einbringen eines weiteren Elementes in den Resonator (Viertelwellenplättchen oder Brewsterplatte) erlaubt zwar eine weitgehende Unterdrückung des Laserflackerns, allerdings sind derartige Elemente im Resonator sehr genau zu justieren, was den Herstellaufwand erhöht, und führen auch bei bester Justage immer zu höheren Verlusten im Resonator (aufgrund Restreflexionen und Streuung), so daß diese höheren Verluste drastisch auch die Leistungsdichte und somit die Verdopplungseffizienz verringern.

Die Stabilisierung der Verdopplerkristall-Temperatur (EP 0 329 442 A2) hingegen kommt ohne solche zusätzlichen Elemente aus und erlaubt bei gleicher Leistungsdichte ebenfalls eine deutliche Reduktion des Laserrauschens. Der Grund hierfür dürfte wohl darin liegen, daß der Verdopplerkristall bei der winkelabhängigen Phasenanpassung (und von dieser soll hier die Rede sein, vergl. Koechner, S. 528) selbst als Viertelwellenplättchen sehr hoher Ordnung wirkt, welches den gleichen Effekt aufweist wie ein zusätzlich eingebrachtes, ohne jedoch zusätzlich justiert werden zu müssen oder zusätzliche Reflexion- oder Streuflächen zu bieten. Die exakte Anpassung der Verdopplerkristall-Länge auf ein ganzzahlig Vielfaches von λ/4 erfolgt nun aber durch eine exakte Abstimmung der Länge des Verdopplerkristalles über die Temperatur.

Dieses Verfahren ist dem erfindungsgemäßen Verfahren bereits sehr nahe, weist aber immer noch einen wesentlichen Mangel auf: Da der Laserresonator im Laufe des Betriebes seine Temperatur ändert, insbesondere unter Änderung der Umgebungsbedingungen oder bei unvollständigem Erreichen eines thermischen Gleichgewichtes, kommt es zu ständigen Änderungen der Laserresonatorlänge und auch der exakten Temperatur des Verdopplerkristalles. Eine reine Stabilisierung der Kristall-Länge auf die Temperatur erlaubt daher nur einen Betrieb in einem sehr engen Temperaturfenster unter ausgesprochen konstanten Umgebungsbedingungen und in stabil eingeschwungenem thermischen Gleichgewicht (s. EP 0 329 442 A2). Diese Bedingungen aber sind bei einem unter realen Anwendungsbedingungen betriebenen Laser in er Regel nicht erfüllt.

Aufgabe der Erfindung, wie sie in Anspruch 1 und den abhängigen Ansprüchen definiert ist, ist daher ein Verfahren, welches es ermöglicht, die mit geringstem Laserrauschen (Flackern) einhergehende optimale Temperatur des Verdopplerkristalls aktiv sich ändernden Umgebungsbedingungen oder anderer Störeinflüsse nachzuregeln und so einen praxisgerechten Lasereinsatz auch außerhalb von definierten Umgebungsbedingungen und unabhängig vom Erreichen eines thermischen Gleichgewichtszustandes zu ermöglichen.

Es zeigen
- Fig. 1: Blockschaltbild des erfindungsgemäßen Regelverfahrens; die gestrichelt gezeichneten Elemente sind gegebenenfalls optional
- Fig. 2: Typisches Rauschen eines resonatorintern frequenzverdoppelten Lasers mit plötzlichem Leistungseinbruch (Flackern) (Zeitachse: 10 ms/Einheit)
- Fig. 3: Rauschmessung eines resonatorintern frequenzverdoppelten Lasers im Zustand starken Flackerns (obere Kurve) und im stabilen Zustand ohne Flackern (untere Kurve)
- Fig. 4: Rauschmessung eines erfindungsgemäß stabilisierten Lasers (Zeitachse: 10 ms/Einheit)

Gegenüber EP 0 329 442 A2 beruht das erfindungsgemäße Verfahren darauf das Rauschen des Lasers selbst zu messen und durch Nachführung der Verdopplerkristall-Temperatur zu minimieren.

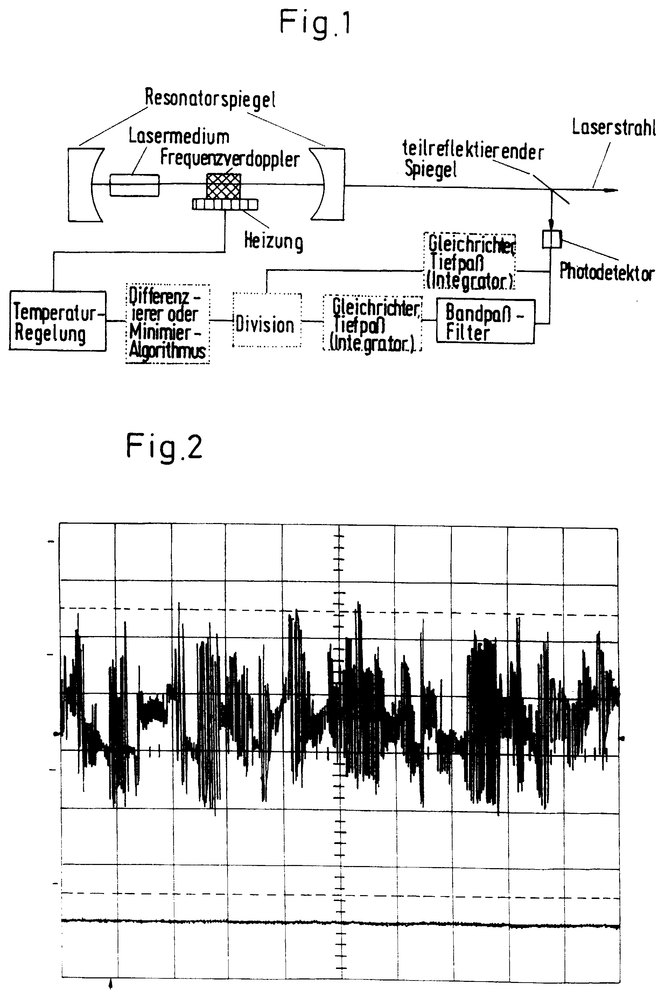

Das zumeist störende Laserrauschen, das niederfrequente "Flackern", läßt sich jedoch schlecht als Regeleingangssignal verwenden, da die Amplitudenmodulation relativ lange Periodendauern aufweist (typisch im Sekundenbereich und darüber), der Modulationsvorgang selbst, also der Leistungseinbruch, hingegen schlagartig vor sich geht (Fig. 2). Man hat somit keine Möglichkeit, durch eine schnelle Reaktion der Temperaturregelung mit den bekannten langsamen Zeitkonstanten einen solchen plötzlichen, aber relativ seltenen Leistungseinbruch durch Gegensteuern zu verhindern.

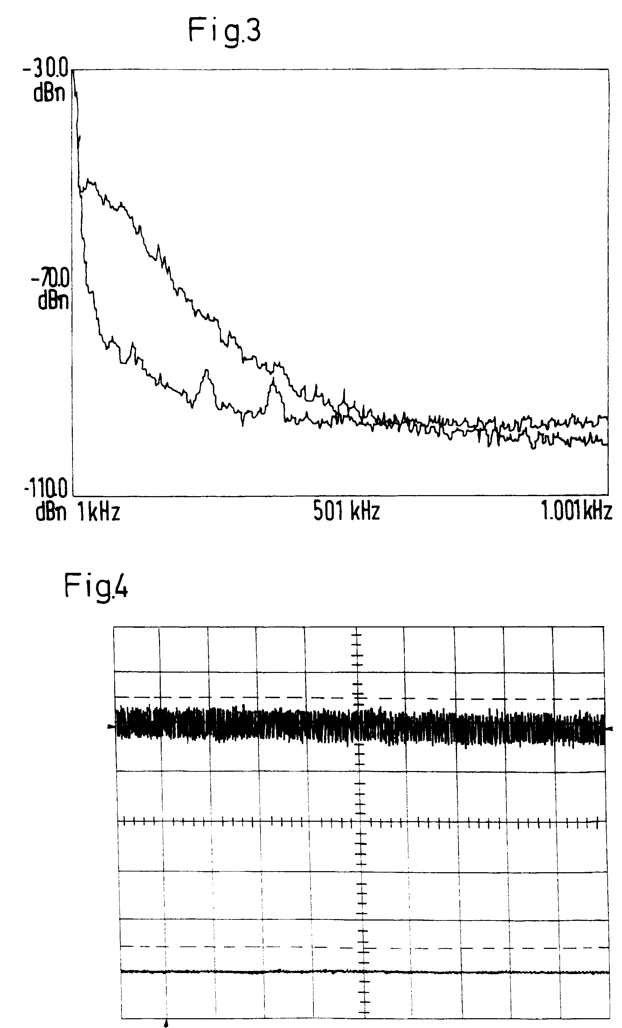

Aus eigenen Messungen konnte jedoch gefunden werden, daß die stabilen Zustände mit fehlendem Laserflackem, bei denen die Verdopplertemperatur also richtig gewählt ist, korreliert sind mit einem besonders geringen höherfrequentem Laserrauschen. So zeigt beispielsweise Fig. 3 eine typische Meßkurve des Laseramplituden-Rauschfrequenzspektrums bei geeigneter Verdopplerkristall-Temperatur und fehlendem Flackern (untere Kurve) und bei schlecht angepaßter Temperatur mit auftretendem Laserflackern (obere Kurve). Man sieht deutlich, daß beide Kurven eine signifikant unterschiedliche Rauschamplitude insbesondere im Frequenzbereich zwischen 10 und 500 kHz aufweisen, wohingegen das Rauschen unter 10 kHz und über 700 kHz ähnlich stark für beide Temperaturen und Laserzustände (mit bzw. ohne Flackern) verläuft. Daher soll dieser Rauschanteil im oben beschriebenen signifikanten Frequenzbereich als Regelsignal für die Temperaturnachführung der Verdopplerkristall-Temperatur herangezogen werden.

Hierzu wird ein geringer Teil der Laserausgangsstrahlung im Bereich einiger Milliwatt oder darunter aus dem eigentlichen Nutzstrahl ausgeblendet (dies kann vorzugsweise der frequenzverdoppelte Strahl oder, weil hiermit korreliert, auch ein Teil der Reststrahlung der Grundwellenlänge sein, die aus dem Laserresonator leckt) und auf einen Photodetektor (etwa eine Halbleiterdiode) gebracht. Das elektrische Ausgangssignal wird dann (gegebenenfalls nach Verstärkung) einem elektrischen Bandpaß zugeleitet, so daß dann am Ausgang nur noch das Rauschsignal im oben beschriebenen signifikanten Frequenzbereich abgegriffen wird. Das Signal wird anschließend gleichgerichtet oder quadriert. Dieses Signal kann nun als zu minimierendes Steuersignal einer Temperaturregelung zugeführt werden, die die Verdopplerkristall-Temperatur nun aktiv auf minimales Rauschsignal hin nachführt. Da in manchen Laseranordnungen die Laserausgangsleistung schwankend oder indefinit angegeben sein kann. kann zusätzlich schon vor dem Bandpaßfilter ein Signal abgeleitet werden, welches integriert wird und so der mittleren Laserleistung proportional ist, so daß durch Quotientenbildung dieses Signales mit dem eigentlichen, gegebenenfalls ebenfalls gleichgerichteten und integrierten Rauschsignal hinter dem Bandpaßfilter ein Maß für das leistungsbezogene relative Rauschen darstellt. Dieses Signal kann nun, je nach Quotientenbildung, minimiert oder maximiert werden, beispielsweise durch Ableitung und Zuführung zu einer Temperaturregeleinheit. Eine andere bevorzugte Ausführung besteht darin, das Rauschsignal entweder vor oder nach der Integration oder Quadratur zu digitalisieren und einer Mikroprozessoreinheit (beispielsweise vom Typ 68 HC 11 oder ähnlichen Typen, welche bereits über geeignete Analog-Eingänge und -Ausgänge verfügt. Alternativ können auch Prozessoren mit externen Analog-Digital- und Digital-Analogwandlern verwendet werden. Nach dem Stande der Technik kann statt einer Digital-Analog-Wandlung am Ausgang auch ein digital kodiertes Impulsweitensteuerungssignal ausgegeben werden) zuzuführen, die in ersterem Falle die Integration bzw. Quasdratur digital durchführt, in beiden Fällen jedoch mittels eines geeigneten Algorithmus die Verdopplerkristall-Temperatur über einen Ausgang so einstellt, daß ein Minimum des Rauschsignales eingenommen wird. Vorzugsweise wird das Ausgangssignal direkt einer Temperatursteuereinheit zur Änderung der Verdopplerkristall-Temperatur zugeführt oder aber einer Temperaturregelung als Änderungssignal zum Temperatursollwert zuaddiert. Selbstverständlich kann das Steuersignal auch an anderer geeigneter Stelle einer Temperaturregeleinheit eingreifen. Im zuvor beschriebenen Falle einer schwankenden Laserleistung kann auch hier wie zuvor beschrieben entweder ein tiefpaßgefiltertes Laserleistungssignal analog mit dem Rasuchsignal einer Quotientenbildung unterworfen und dann der Mikroprozessoreinheit zugeführt oder direkt über einen anderen Eingangskanal der Mikorprozessoreinheit zugeführt werdern, welche in letzrerem Falle die beschriebene Quotientenbildung digital durchführt.

Eine besonders vereinfachte Anordnung erhält man dadurch, daß das gegebenenfalls verstärkte Photodiodensignal einem Mikroporzessor zugeführt wird, der sowohl die Bandpaßfilterung als auch die notwndigen gleichrichtungs- bzw. quadrierungsschritte und auch die Integrationen und Quotientenbildung durchführt. Weiter kann der Mikroprozessor auch die Temperatursteuerung des Verdopplerkristalles übernehmen.

Das vorgeschlagene Verfahren erlaubt so, fluktuationsfrei (flackerfreie) Zustände der frequenzverdoppelten Laserstrahlung aktiv nachzuregeln bei relativ geringer Bandbreite und, anders als im Falle der chaotischen Regelungen, rein linearem Regelansatz, um so die optimale Verdopplertemperatur auch unter sich ändernden Umwelt- oder Störeinflüssen bzw. abseits des thermischen Gleichgewichtes zu halten. Ebenso können Alterungs- oder Dejustageeffekte (bis zu einem gewissen Grade) ausgeglichen werden.

Vorteilhaft kann es sein, den Regelbereich des Temperaturreglers so einzugrenzen (mit nach dem Stande der Technik bekannten Maßnahmen), daß kein zweites Minimum des Laserrauschens (keine zweite optimale Verdopplertemperatur; die richtige Länge des Kristalles für seine Wirkung als Viertelwellenplättchen ist ja mit λ/4 periodisch) eine Uneindeutigkeit im Regelverhalten hervorruft. Weiter kann eine zu starke Änderung der Verdopplertemperatur neben Mehrdeutigkeiten im Rauschminimum auch zu einer starken Änderung der Laserleistung führen, was ebenfalls eine Beschränkung des Regelbereiches erfordert.. Damit das Regelsystem nicht an den Grenzen dieser Beschränkung "anschlägt", ist hier gegebenenfalls vorzusehen, daß bei Erreichen der Beschränkungsgrenzen ein Rücksprung in einen anderen Temperaturbereich mit hinreichendem Abstand zu den Regelgrenzen stattfindet. Dies kann insbesondere in der digitalen Ausführung des beschriebenen Verfahrens durch eine entsprechende Programmierung des Mikroprozessors leicht vorgenommen werden.

## Patentansprüche

1. Verfahren zur Minderung des Amplitudenrauschens von Festkörperlasern mit resonatorinterner Frequenzverdopplung, wobei sich ein Festkörperlasermaterial und ein Frequenzverdopplungskristall in einem gemeinsamen Resonator befinden, **dadurch gekennzeichnet**, daß ein Teil der frequenzverdoppelten Laserausgangsstrahlung oder der Grundwellenstrahlung auf einen Photodetektor geführt wird, deren elektrisches Ausgangssignal einer Bandpaßfilterung zugeführt wird, die einen für das Rauschen typischen Frequenzbereich herausfiltert, und dieses Ausgangssignal gegebenenfalls nach Gleichrichtung oder Quadratur und/oder Integration einer Temperaturregelung oder -steuerung zugeführt wird, welche die Temperatur des Frequenzverdopplerkristalles so nachregelt, daß das Ausgangssignal hinter dem Bandpaßfilter und somit das Amplitudenrauschen der Laserstrahlung minimiert wird.

2. Verfahren nach Anspruch 1, dadurch gekennzeichnet, daß der Durchlässigkeitsbereich des Bandpaßfilters im Bereich von typisch 10 bis 100 kHz am unteren Frequenzende und typisch 300 bis 700 kHz am oberen Frequenzende begrenzt ist, so daß zumindest der Frequenzbereich von etwa 100 kHz bis 300 kHz hinter dem Bandpaßfilter abgegriffen werden kann.

3. Verfahren nach Anspruch 1 oder 2, dadurch gekennzeichnet, daß auch vor dem Bandpaßfilter ein Ausgangssignal abgegriffen wird, welches gegebenenfalls tiefpaßgefiltert wird, und welches mit dem Signal hinter dem Bandpaßfilter ins Verhältnis gesetzt wird, so daß dieses Verhältnis ein Maß für das leistungsbezogene relative Rauschen in dem durch den Bandpaß gegebenen Frequenzbereich darstellt und die Temperatur des Frequenzverdopplers so eingestellt wird, daß der Quotient im Falle, daß der Quotient das Verhältnis von Rauschsignal hinter dem Bandpaßfilter zu Leistungssignal vor dem Bandpaß darstellt minimiert oder im zum vorhergenannten reziproken Falle maximiert wird.

4. Verfahren nach einem oder mehreren der vorigen Ansprüche, dadurch gekennzeichnet, daß der Regelbereich der Temperaturregelung durch geeignete Maßnahmen derart beschränkt wird, so daß ein lokales Minimum des Rauschsignales hinter dem Bandpaßfilter eindeutig ausgeregelt werden und kein zweites Minimum im Regelbereich auftreten kann.

5. Verfahren nach einem oder mehreren der oben genannten Ansprüche, dadurch gekennzeichnet, daß das Augangssignal des Bandpaßfilters analog gleichgerichtet oder quadriert und tiefpaßgefiltert oder integriert wird und einem Analogeingang eines Mikroprozessors zugeführt wird, welcher durch einen geeigneten Algorithmus numerisch das Minimum des Rauschens in Abhängigkeit der Verdopplertemperatur bestimmt und über einen Steuerausgang die Verdopplertemperatur so nachregelt, daß dieses Minimum des Rauschens im Frequenzbereich des Bandpaßfilters eingehalten wird.

6. Verfahren nach Anspruch 5, dadurch gekennzeichnet, daß dem Mikroprozessor zusätzlich an einem weiteren Analogeingang ein Signal zugeführt wird, welches der Laserleistung proportional ist, und der Mikroprozessor durch einen geeigneten Algorithmus numerisch das Minimum des Quotienten aus Rauschsignal und Leistungssignal oder das Maximum des Kehrwertes hiervon in Abhängigkeit der Verdopplertemperatur bestimmt und über einen Steuerausgang die Verdopplertemperatur so nachregelt, daß dieses Minimum des relativen Rauschens im Frequenzbereich des Bandpaßfilters eingehalten wird.

7. Verfahren nach einem der Ansprüche 1 bis 4, dadurch gekennzeichnet, daß das Augangssignal des Bandpaßfilters einem Analogeingang eines Mikroprozessors zugeführt wird, welcher dieses Signal numerisch gleichrichtet oder quadriert und gegebenenfalls integriert und durch einen geeigneten Algorithmus numerisch das Minimum des Rauschens in Abhängigkeit der Verdopplertemperatur bestimmt und über einen Steuerausgang die Verdopplertemperatur so nachregelt, daß dieses Minimum des Rauschens im Frequenzbereich des Bandpaßfilters eingehalten wird.

8. Verfahren nach Anspruch 7, dadurch gekennzeichnet, daß dem Mikroprozessor zusätzlich an einem weiteren Analogeingang ein Signal zugeführt wird, welches der Laserleistung proportional ist, der Mikroprozessor den Quotienten aus Rauschsignal und Leistungssignal bildet oder seinen Kehrwert und durch einen geeigneten Algorithmus numerisch das Minimum dieses Quotienten aus Rausch- und Leistungssignal oder das Maximum des Kehrwertes hiervon in Abhängigkeit der Verdopplertemperatur bestimmt und über einen Steuerausgang die Verdopplertemperatur so nachregelt, daß dieses Minimum des relativen Rauschens im Frequenzbereich des Bandpaßfilters eingehalten wird.

9. Verfahren nach einem oder mehreren der Ansprüche 1 bis 4, dadurch gekennzeichnet, daß das Ausgangssignal des Bandpaßfilters gleichgerichtet oder quadriert und/oder integriert wird und ebenfalls analog ein Quotient aus diesem Rauschsignal und einem der Laserleistung proportionalem Signal gebildet wird oder dessen Kehrwert, und daß weiter das Ausgangssignal des Quotientenbildners einem Analogeingang eines Mikroprozessors zugeführt wird, welcher durch einen geeigneten Algorithmus numerisch das Minimum des Quotienten aus Rauschen und Leistung oder das Maximum des Kehrwertes hiervon in Abhängigkeit der Verdopplertemperatur bestimmt und über einen Steuerausgang die Verdopplertemperatur so nachregelt, daß dieses Minimum des Rauschens im Frequenzbereich des Bandpaßfilters eingehalten wird.

10. Verfahren nach einem oder mehreren der oben genannten Ansprüche, gekennzeichnet dadurch, daß das gegebenenfalls verstärkte Photodetektorensignal dem Mikroprozessor zugeführt wird, welcher sowohl die Aufgabe der Bandpaßfilterung als auch die erforderlichen Gleichrichtungs- oder Quadrierungsschritte und Integrationen sowie Quotientenbildungen vornimmt.

11. Verfahren nach einem oder mehreren der oben genannten Ansprüche, gekennzeichnet dadurch, daß das Temperatursteuersignal direkt einer Temperatursteuerung des Verdopplerkristalles zugeführt oder dem Sollwert einer Temperaturregelung des Verdopplerkristalles hinzuaddiert wird.

12. Verfahren nach einem oder mehreren der oben genannten Ansprüche, gekennzeichnet dadurch, daß der Mikroprozessor auch die Temperatursteuerung des Verdopplerkristalles übernimmt.

## Claims

1. Method for reducing the amplitude noise of solid-state lasers with frequency doubling internal to the resonator, a solid-state laser material and a frequency doubler crystal being situated in a common resonator, characterised in that a part of the frequency-doubled laser output radiation or of the fundamental wave radiation is fed to a photodetector, the electrical output signal of which is fed to a bandpass filter, which filters out a frequency range which is typical for the noise, and this output signal, if necessary after rectification or squaring and/or integration, is fed to a temperature control unit, which readjusts the temperature of the frequency doubler crystal in such a way that the output signal downstream of the bandpass filter, and therefore the amplitude noise of the laser radiation, are minimised.

2. Method according to Claim 1, characterised in that the passband of the bandpass filter is limited within the range from typically 10 to 100 kHz at the lowfrequency end and typically 300 to 700 kHz at the high-frequency end, so that at least the frequency range from about 100 kHz to 300 kHz can be tapped off downstream of the bandpass filter.

3. Method according to Claim 1 or 2, characterised in that an output signal is also taken off upstream of the bandpass filter, which signal is low-pass filtered if necessary, and its ratio is formed with respect to the signal downstream of the bandpass filter, so that this ratio represents a measure of the power-related noise in the frequency range given by the bandpass, and the temperature of the frequency doubler is set in such a way that the quotient. in the case where the quotient represents the ratio of noise signal downstream of the bandpass filter to power signal upstream of the bandpass, is minimised, and in the case which is the reciprocal of the above, is maximised.

4. Method according to one or more of the preceding claims, characterised in that the control range of the temperature control unit is limited, by means of suitable measures, in such a manner that a local minimum in the noise signal downstream of the bandpass filter is unambiguously regulated out and it is impossible for a second minimum to occur within the control range.

5. Method according to one or more of the preceding claims, characterised in that the output signal from the bandpass filter undergoes analogue rectification or squaring and is low-pass filtered or integrated, and is fed to an analogue input of a microprocessor which, by means of a suitable algorithm, numerically determines the minimum of the noise as a function of the doubler temperature and, via a suitable control output, readjusts the doubler temperature in such a manner that this minimum of the noise is maintained in the frequency range of the bandpass filter.

6. Method according to Claim 5, characterised in that a further analogue input of the microprocessor is additionally fed a signal which is proportional to the laser power, and the microprocessor, by means of a suitable algorithm, numerically determines the minimum of the quotient of noise signal and power signal or determines the maximum of the reciprocal of this quotient, as a function of the doubler temperature, and, via a control output, readjusts the doubler temperature in such a manner that this minimum of the relative noise is maintained in the frequency range of the bandpass filter.

7. Method according to one of Claims 1 to 4, characterised in that the output signal from the bandpass filter is fed to an analogue input of a microprocessor which numerically rectifies or squares and, if appropriate, integrates this signal and which, by means of a suitable algorithm, numerically determines the minimum of the noise as a function of the doubler temperature and, via a control output, readjusts the doubler temperature in such a manner that this minimum of the noise is maintained in the frequency range of the bandpass filter.

8. Method according to Claim 7, characterised in that a further analogue input of the microprocessor is additionally fed a signal which is proportional to the laser power, the microprocessor forms the quotient of noise signal and power signal or its reciprocal and, by means of a suitable algorithm, numerically determines the minimum of this quotient of noise signal and power signal or the maximum of the reciprocal of this quotient as a function of the doubler temperature and. via a control output, readjusts the doubler temperature in such a manner that this minimum of the relative noise is maintained in the frequency range of the bandpass filter.

9. Method according to one or more of Claims 1 to 4, characterised in that the output signal of the bandpass filter is rectified or squared and/or integrated. and likewise, in analogue form, a quotient of this noise signal and a signal which is proportional to the laser power, or the reciprocal of this quotient, is formed, and in that furthermore the output signal from the quotient former is fed to an analogue input of a microprocessor which, by means of a suitable algorithm, numerically determines the minimum of the quotient of noises and power or the maximum of the reciprocal of this quotient, as a function of the doubler temperature, and which, via a control output, readjusts the doubler temperature in such a manner that this minimum of the noise is maintained in the frequency range of the bandpass filter.

10. Method according to one or more of the preceding claims, characterised in that the photodetector signal, which has been amplified if necessary, is fed to the microprocessor, which performs both the bandpass filtering and the necessary rectification or squaring steps and integrations and quotient-forming steps.

11. Method according to one or more of the preceding claims, characterised in that the temperature control signal is fed directly to a temperature control unit of the doubler crystal or is added to the set point value of a temperature control unit of the doubler crystal.

12. Method according to one or more of the preceding claims, characterised in that the microprocessor also carries out the temperature control of the doubler crystal.

## Revendications

1. Procédé de réduction du bruit d'amplitude de lasers à solides à doublage de fréquence interne au résonateur se trouvant parmi un laser à solide et un cristal de doublage de fréquence dans un résonateur d'ensemble caractérisé en ce qu'une partie du rayon de sortie du laser à fréquence doublée ou du rayon d'ondes directes est guidé sur un photodétecteur dont le signal électrique de sortie est acheminé jusqu'à un système de filtrage passe bande qui extrait par filtrage une gamme de fréquence typique du bruit, et ce signal de sortie est acheminé, éventuellement après redressement ou quadrature et/ou intégration jusqu'à un système de régulation ou de contrôle de la température du cristal de doublage de fréquence, de manière à minimiser le signal de sortie après le filtre passe-bande et par conséquent le bruit d'amplitude du rayonnement laser.

2. Procédé selon la revendication 1, caractérisé en ce que le coefficient de perméabilité est délimité typiquement de 10 à 100 kHz environ pour les plus basses fréquences et d'environ 300 à 700 kHz pour les plus hautes fréquences de sorte qu'au moins la plage de fréquence puisse être mesurée derrière le filtre passe-bande à partir d'approximativement 100 à 300 kHz.

3. Procédé selon la revendication 1 ou 2, caracténsé en ce qu'un signal de sortie est aussi mesuré avant le filtre passe-bande, qui au besoins est filtré en passe-bas est qui est placé en rapport avec le signal enregistré derrière le filtre passe-bande, de sorte que ce rapport représente une mesure pour la base de puissance nécessaire au bruit relatif dans la plage de fréquence donné par le filtre passe-bande et la température de la fréquence doublée, que la proportion du quotient de signal de bruit (représenté) derrière le filtre passe-bande vers le signal de puissance avant le filtre passe-bande est réduite ou sera augmentée dans le cas contraire à celui mentionné ci-dessus.

4. Procédé selon l'une quelconque des revendications précédentes, caractérisé en ce que la plage de réglage de la commande de température est limitée par des mesures appropriées de telle façon qu'une réduction locale du signal de bruit derrière le filtre passe-bande soit seule compensée et aucune deuxième réduction ne pouvant se produire dans la plage de réglage.

5. Procédé selon l'une quelconque des revendications ci-dessus, caractérisé en ce que le signal de sortie identique à un signal redressé ou élevé au carré et filtré au filtre passe-bas ou intégré, et fournit une entrée analogique à un microprocesseur, qui détermine un algorithme numérique approprié au minimum de bruit en fonction de la température doublée et réajustée de la commande de sortie au-dessus de la température de la fréquence doublée, que ce minimum de bruit sera gardé dans la plage de fréquence du filtre passe-bande.

6. Procédé selon la revendication 5, caracténsé en ce que le microprocesseur rapporté à une autre entrée analogique assurant un signal qui est proportionnel à la puissance du laser et le microprocesseur à travers un algorithme numérique approprié au quotient du minimum du signal de bruit et du signal de puissance ou du maximum en cas de perméance en fonction de la température doublée et la commande de sortie au-dessus de la température de la fréquence doublée est réajustée, que ce minimum de bruit relatif sera gardé dans la plage de fréquence du filtre passe-bande.

7. Procédé selon l'une des revendications 1 à 4, caractérisé en ce que le signal de sortie du filtre passe-bande assure une entrée analogique à un microprocesseur qui redresse le signal numérique ou l'élève au carré et au besoins l'intègre, par un algonthme numérique approprié au minimum de bruit en fonction de la température doublée et réajuste une commande de sortie au-dessus de la température de la fréquence doublée, que ce minimum de bruit sera gardé dans la plage de fréquence du filtre passe-bande.

8. Procédé selon la revendication 7, caractérisé en ce que le microprocesseur rapporté à une autre entrée analogique assurant un signal qui est proportionnel a la puissance du laser, le microprocesseur forme le quotient du signal de bruit et du signal de puissance ou de sa perméance et à travers un algorithme numérique approprié à ce quotient du minimum du signal de bruit et du signal de puissance ou du maximum en cas de perméance en fonction de la température doublée et la commande de sortie au-dessus de la température de la fréquence doublée est réajustée, que ce minimum de bruit relatif sera gardé dans la plage de fréquence du filtre passe-bande.

9. Procédé selon l'une quelconque des revendications 1 à 4, caractérisé en ce que le signal de sortie du filtre passe-bande redresse le signal numérique ou l'élève au carré et/ou l'intègre et aussi à un quotient du signal de bruit et à la puissance du laser proportionnelle au signal formé ou sa valeur réciproque, et que loin du signal de sortie de la formation du quotient à une entrée analogique d'un microprocesseur qui détermine à travers un algorithme numérique approprié au quotient du minimum du signal de bruit et de puissance ou du maximum en cas de perméance en fonction de la température doublée et la commande de sortie au-dessus de la température de la fréquence doublée est réajustée, que ce minimum de bruit relatif sera gardé dans la plage de fréquence du filtre passe-bande.

10. Procédé selon l'une quelconque des revendications ci-dessus, caractérisé en ce que l'intégration renforce le photodétecteur du signal du microprocesseur au besoin l'alimente qui fait fonction de filtrage par filtre passe-bande et si nécessaire rectifie ou redresse par étape et intègre, forme tout autant le quotient.

11. Procédé selon l'une quelconque des revendications ci-dessus, caractérisé en ce que le signal de commande de la température fournit directement un régulateur du cristal de doublage ou la valeur désirée de régulation d'un cristal de doublage rapporté.

12. Procédé selon l'une quelconque des revendications ci-dessus, caractérisé en ce que le microprocesseur est relayé comme la régulation de température.
